# EUROPEAN PATENT APPLICATION

(11) **EP 2 728 179 A1**
(43) Date of publication of application: **07.05.2014**
(21) Application number: 12382417.9
(22) Date of filing: 30.10.2012
(51) Int. Cl.: F03D 11/04

(54) **Wind farm and method for installing a wind farm**

(71) Applicant: Alstom Wind, S.L.U., 08005 Barcelona (ES)
(72) Inventor: Rodriguez Tsouroukdissian, Arturo, 08011 Barcelona (ES)
(74) Representative: ZBM Patents - Zea, Barlocci & Markvardsen

(57) **Abstract**

It comprises a number of wind turbines (501, 502) having a modular jacket (300') formed of at least an upper substructure (310), an intermediate substructure (320), and a lower substructure (330) that are connectable to each other. At least the intermediate substructure (320) in a wind turbine foundation is different in height (h) from at least one substructure (310, 320, 330) in another wind turbine foundation in order to adapt the different wind turbines (501, 502) of the wind farm (500) to a site (10) having differences in depth (ΔH) where the wind turbines (501, 502) of the wind farm (500) are installed of the order of about 20 to 60 m.

## Description

A wind farm having the features of the preamble of claim 1 is herein disclosed. A method for installing such a wind farm having the features of the preamble of claim 11 is also disclosed.

As used herein, a wind farm is a group of at least two wind turbines that are installed in the same location for producing electric power. Locations, such as offshore or onshore are herein envisaged for the present wind farm.

The present disclosure is particularly focused to foundation structures of wind turbines in a wind farm comprising jackets.

### BACKGROUND

Jacket foundations are known in wind turbine foundations. They comprise a structure intended to support the wind turbine, and particularly the wind turbine tower. Jacket foundations typically comprise a steel frame in the form of a lattice tower including a number of connecting members. The connecting members are connected to each other by means of bracings and tubular joints.

In offshore applications, for example, the jacket foundations are fitted in conjunction with a number of piles into the sea bed for appropriately transferring structural loads from the tower to the sea bed. The piles are steel elongated pieces intended to be driven into the sea bed. Piles are shaped for receiving corresponding pins. The pins are elongated connecting members extending downwards from the wind turbine foundation.

When the pins are inserted into the corresponding piles a high performance concrete-like mass such as grout is injected. The grout is injected typically through the bottom of a chamber formed between the pile and the pin thus forming a grouted joint. Grout injection serves the purpose of establishing a firm connection between the piles and the pins. Grout injection also helps to avoid undesirable horizontal deflections and inhibit corrosion. The grout provides an increased energy absorption capacity to the structure of the foundation.

Jacket foundations formed of a number of substructures are known in the art. They are used in applications such as in the oil and gas sector. Jacket foundations comprising substructures in the field of wind energy are totally dynamically different from oil and gas structures, and they are starting their development.

At present, wind turbine foundations are constructed with varying structural features in order to adapt to different sites having different characteristics, such as sea depth. In order to obtain the highest level of standardization of the wind turbine foundations while adapting to most sites, the distance between the piles in the jacket may be made constant. This however has the disadvantage that the inclination of the connecting members of the jacket needs to be varied. This has the disadvantage that the joints in the vertical and diagonal bar members of the jacket structure are changed. A known alternative solution is keeping the inclination of the connecting members of the jacket constant. This however has the disadvantage that the foot unit or base is changed so that a different specific foot unit or base is required to be made for each position in the site in order to properly fit the piles.

Document US5356239 a modular jacket assembly is disclosed comprising interchangeable stackable substructures. The substructures comprise vertical members, some of which are adapted to allow the passage of piles. The technical problem this document deals with is the manufacture of parts having different sizes to be adapted to different sites having different features.

Document W02012052029 discloses wind turbine foundations comprising stackable substructures arranged on a base placed on the sea bed and a plurality of tensioning elements extending from the base to a location adjacent the surface of the water. As above, this solution is focused to the manufacturing of different foundations to be adapted to different sites having different features.

The above arrangements do not deal with the same wind farm site having different features. There are many locations where a wind farm is installed having large differences in sea depth, for example in the case of offshore applications. In the prior art, this involves the use of quite different jacket structures for wind turbines installed in the same wind farm site where varying features such as sea depth, in offshore applications, are present. This directly affects the design of most of the wind turbine components, resulting in complex and costly manufacturing, transportation and installation processes. This is particularly relevant since in recent years, larger offshore turbines have been developed due to their greater rated capacity and where a wind farm has a large number of wind turbines.

Therefore, a more efficient yet cost effective wind farm is desirable which solves these problems directed to wind turbine foundations, particularly in offshore structures, but not limited to this, and which makes wind energy industry projects economically more cost effective.

### SUMMARY

A wind farm having the combination of technical features of claim 1 is herein disclosed. A method for installing such a wind farm having the combination of technical features of claim 11 is also disclosed herein.

Advantageous embodiments of the present wind farm are defined in the dependent claims.

As stated above, a wind farm as used herein comprises two or more wind turbines installed in the same location, such as offshore, onshore, etc. for producing electric power.

The wind turbines in the wind farm comprise a tower and a nacelle. The nacelle is rotatably mounted on the tower. A rotor hub provided with rotor blades is rotatably mounted on the rotor hub. The nacelle houses an electrical generator that is connected to the rotor blades. Power control and mechanical equipment is also received into the nacelle. The rotor blades are caused to spin as they are struck by the wind. The rotational energy of the rotor blades is converted into electrical energy within the generator. The resulting electrical energy is transformed by a transformer and fed into the electricity grid.

Wind turbine towers are in turn supported by a foundation structure. The foundation advantageously comprises a modular jacket. The modular jackets in the present wind farm are formed of a number of substructures. The substructures of the modular jacket are connectable to each other.

In the present wind farm at least one of the substructures of the modular jacket of one wind turbine is different in height from at least one substructure of another modular jacket. Such height difference in the different wind turbines of the wind farm is such that the foundation, i.e. the modular jacket, can be well adapted to a site with variable depths. The term depth as used herein when referring to offshore applications, i.e. sea depth, is intended to designate the distance or height from the sea level to the sea bed, in the same wind farm site where wind turbines are installed.

As stated above, the modular jacket of the wind turbines in the present wind farm are formed of a number of substructures. In one example, these substructures may be at least an upper substructure, an intermediate substructure, and a lower substructure. These substructures are connectable to each other. The jacket may include grouted connections for connecting the substructures to each other.

The upper substructure may have at least one inclined portion while the intermediate substructure may be substantially vertical. The substantially vertical configuration of the intermediate substructure is advantageous since it provides a good resistance to the large bending moments induced by the wind and wave loads. On the other hand, the lower substructure may comprise at least one inclined portion and may include a foot unit. This foot unit of the lower substructure may include a number of pins. The pins may be adapted for receiving at least one portion of the length of corresponding piles. The piles are adapted to be inserted into a surface of the site, such as the sea bed in offshore applications. A grouting chamber may be defined between the pin and the pile for receiving grout in order to establish a grouted connection.

According to one important feature of the present wind farm, at least the intermediate substructure in one wind turbine foundation is different in height from at least the intermediate substructure in another wind turbine foundation. This allows different wind turbines of the wind farm to be easily adapted to a site where varying sea depths are present, thus reducing overall costs associated with wind turbine foundations in the wind farm. The remainder substructures in at least two different wind turbine foundations may be at least similar in height to each other.

In practice, the present wind farm is such that at least one substructure in a wind turbine foundation that is different in height from at least one substructure in another wind turbine foundation. Different wind turbines in the wind farm can be adapted easily and with lower costs to a site where sea depth varies for example from about 20 to 60 m.

Due to the modular nature of the jacket in the above disclosed wind farm, a number of specific substructures of jacket may be standardized. This makes foundations easier to manufacture in series resulting in lower manufacturing costs. This advantage is more important as the number of wind turbines in the wind farm increases. Complexity is reduced as the number of jacket substructures having different designs is greatly reduced, that is, fewer site-specific parts have to be manufactured. Logistics of the whole wind farm is thus facilitated. The present wind farm is particularly advantageous in arrangements including a large number of wind turbines.

The method for installing the above described wind farm comprises providing the lower substructure; fitting piles into the site surface such as the sea bed; attaching the piles to the lower substructure; attaching the intermediate substructure to the lower substructure; and attaching the upper substructure to the intermediate substructure.

In some advantageous embodiments, at least one of the attachments of the intermediate substructure to the lower substructure and the upper substructure to the intermediate substructure is a grouting attachment.

Additional objects, advantages and features of embodiments of the present wind farm will become apparent to those skilled in the art upon examination of the description, or may be learned by practice thereof.

### BRIEF DESCRIPTION OF THE DRAWINGS

The present disclosure refers to particular embodiments of the present wind farm shown by way of non-limiting examples in the appended drawings.

In said drawings:
Figure 1a diagrammatically shows a wind farm of the prior art;
Figures 1b and 1c are perspective and elevational views respectively of the jacket structure in the wind turbines of the prior art wind farm shown in figure 1a;
Figure 2 diagrammatically shows one example of the present wind farm; and
Figure 3 is an exploded elevational view of one example of a modular jacket in which the upper substructure, the intermediate substructure, and the lower substructure have been depicted in an unassembled state;

### DETAILED DESCRIPTION OF EMBODIMENTS

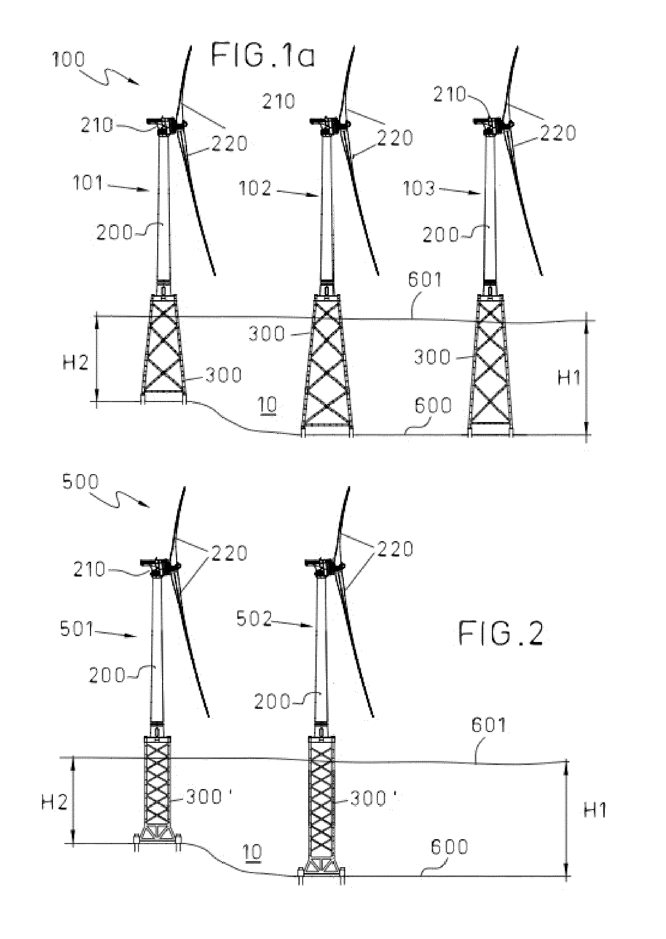

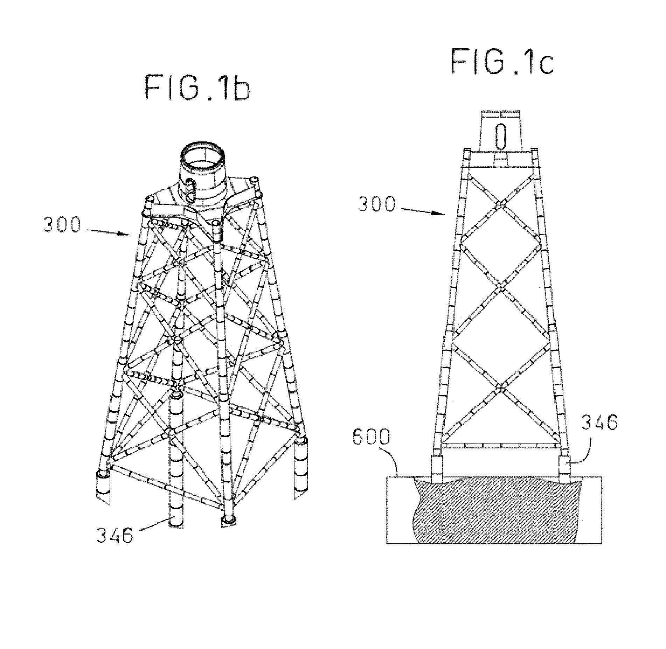

One example of a standard prior art wind farm 100 is shown in figure 1 of the drawings. One example of the present wind farm 500 is shown in figures 2-4 of the drawings. Throughout the description of all the views in the drawings, like reference numerals refer to like parts.

The wind farm 100 of the prior art shown in figure 1 comprises three wind turbines 101, 102, 103. The present wind farm 500 shown in figure 2 comprises two wind turbines 501, 502. A different number of wind turbines other than those depicted for the wind farms 100 and 500 are also possible as long as they comprise two or more wind turbines.

The wind farms 100, 500 have their corresponding wind turbines 101, 102, 103, 501, 502 each installed in a corresponding site 10. In this specific example, the site 10 of the wind farms 100, 500 is offshore. In the bottom of the site 10, that is, the sea bed 600, the wind turbines 101, 102, 103, 501, 502 are partly fitted.

The wind turbines 101, 102, 103, 501, 502 in both wind farms 100, 500 respectively comprise a tower 200 and a nacelle 210. The nacelle 210 is rotatably mounted on the tower 200. A rotor is rotatably mounted on the nacelle 210. The rotor conventionally comprises a hub having rotor blades 220.

The rotor blades 220 are caused to spin as they are struck by the wind which rotational energy is converted into electrical energy within a generator (not shown) placed within the nacelle 210. The electrical energy is transformed by a transformer (not shown) and fed into the electricity grid.

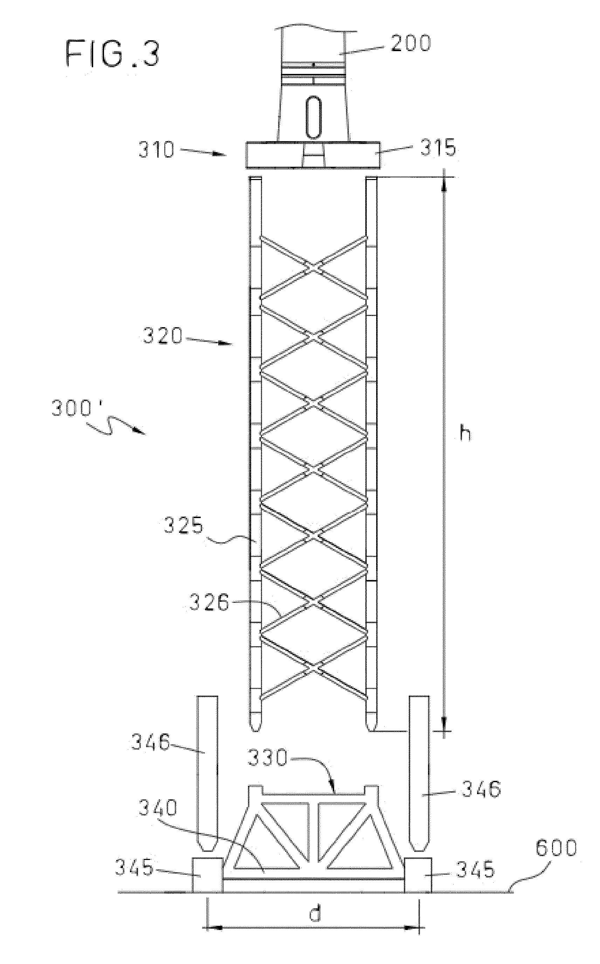

The tower 200 of wind turbines 101, 102, 103, 501, 502 in both wind farms 100, 500 are supported by a foundation. The foundation of the wind turbines 101, 102, 103 in the wind farm 100 of the prior art shown in figures 1a, 1b and 1c comprises a standard jacket 300. The foundation of the wind turbines 501, 502 in the present wind farm 500 shown in figures 2 and 3 comprises a modular jacket 300'. The jackets 300, 300' are adapted to transfer loads from the wind turbine tower 200 to the bottom of the site 10. The jackets 300, 300' of the wind farms 100, 500 are designed according to the conditions of the site 10.

One important site condition in the present example of offshore applications is sea depths H1, H2...., and more specifically the difference between sea depths ΔH= H1-H2. As shown in the figures, the water depths H1, H2... correspond to the different values of the distance or height from the sea level 601 to the sea bed 600 in the particular site 10 of the wind farm 100, 500.

The examples of the wind turbines 101, 102 and 103 in the wind farm 100 of the prior art in figure 1 show different strategies used to adapt jacket structures to sites having different characteristics. This has been illustrated merely as an example: in the same wind farm, only one strategy is usually adopted.

In the configuration of the foundation in wind turbine 102 the inclination of the jacket is similar to that of the wind turbine 101 while the size of the foot unit (distance between piles) is different. Instead, in the configuration of the foundation in wind turbine 102 the size of the foot unit (distance between piles) is not varied while the inclination of the jacket is different. Therefore, wind turbines 102 and 103 are two different strategies in view to obtain the highest level of standardization.

However, in the present wind farm 500 shown in figures 2 and 3, the strategy is quite different. Specifically, the foundation in the present wind farm 500 comprises a modular jacket 300'. The modular jacket 300' is adapted to be pinned into the sea bed 600 by means of piles 346. The modular jacket 300' consists of a frame that is suitably formed of three modules or substructures 310, 320, 330. The substructures 310, 320, 330 are connectable to each other through suitable grouted connections.

Now referring to figure 3 of the drawings, the first module of the jacket 300' is the upper substructure or transition piece 310. This is intended to support the wind turbine tower 200. The transition piece 310 further includes a working platform 315. The working platform 315 is arranged just below the wind turbine tower 200 as shown in figure 3.

Continuing with the example shown in figure 3, the second module of the jacket 300' is an intermediate substructure 320. The intermediate substructure 320 is formed of a number of substantially vertical main connecting members 335 and a number of oblique secondary connecting members 326. The substantially vertical configuration of the intermediate substructure 320 allows a good resistance to be provided to resist the large bending moments induced by the wind and wave loads present in the site 10 where the wind turbines 501, 502 are installed.

Again referring to figure 3 of the drawings, the third module of the jacket 300' is a lower substructure 330. The lower substructure 330 comprises one inclined portion 335 and a foot unit 340. The foot unit 340 is advantageously used in the present embodiment as a template for pilling. Specifically, the foot unit 340 of the lower substructure 330 includes four pins 345. The pins 345 are arranged spaced at a distance d apart to each other. The pins 345 are conveniently adapted for receiving at least one portion of the length of corresponding piles 346. When installing the foundation, the piles 346 are inserted into the sea bed 600 and into the pins 345. Between the pins 345 and the piles 346 a grouting chamber is defined (not shown) for receiving grout.

In the present wind farm 500 shown in figures 2 and 3 of the drawings, the intermediate substructure 320 in the wind turbines 501, 502 are different in height h from each other. Differences in height h between the wind turbines 501, 502 of the wind farm 500 allows the modular jackets 300' to be well adapted to the different sea depths H1, H2... of the sea bed 600 in the site 10 where the wind turbines 501, 502 are installed.

Manufacturing only intermediate substructures 320 for different in the wind turbines 501, 502 with different heights h from each other is more cost effective than manufacturing different whole jacket structures for different in the wind turbines. This can be carried out for example by inserting brace elements and adapting the tubular thicknesses and diameters of the connecting members 325, 326 of the intermediate substructures 320. Other elements such as the piles 346 depend not only on differences in sea depths ΔH= H1-H2 and loads, but on the soil type. Piles 346 are also site-specific like the intermediate substructures 320. Piles 346 and may vary in height, while diameter may be constant. This is not however a problem since several types of piles 346 are cost effective due to their manufacturing costs.

The remainder substructures, that is, the upper and lower substructures 310, 330 in different wind turbines 501, 502 may be at least similar in height to each other. In one example, the intermediate substructures 320 in the wind turbines 501, 502 can be well adapted to sites 10 where differences in the sea depth ΔH= H1-H2 range from about 20 to 60 m, such as 40 m. For example, H1 may be of the order of 15 m and H2 may be of the order of 55 m.

The main connecting members 335 of the lower substructure 330 are substantially vertical in each wind turbine 501, 502 of the present wind farm 500 as stated above. This involves that the distance d between the pins 345 is constant regardless differences in the sea depth ΔH at the site 10.

In contrast, the whole standard jackets 300 of the wind turbines 101, 102 in the wind farm 100 of the prior art shown in figures 1a, 1b, 1c should be manufactured quite different as to height and inclination in order to be adapted for the varying conditions of the site 10. As clearly shown in figure 1a of the drawings, the inclination of the connecting members 335 wind turbines 101, 102 is varied according to the differences in the sea depth ΔH at the site 10. This has undesirable consequences in higher manufacturing, installation and transportation costs.

In the present modular configuration of the jacket 300 of the present wind farm 500 the upper and lower substructures 310, 330 may be thus standardized while adapting the intermediate substructure 320 in height h to the differences in the sea depth ΔH at the site 10. The present jacket structures 300 are easier to manufacture in series which advantage is more important as the number of wind turbines 501, 502 in the wind farm 500 increases.

The wind farm (500) may be installed by first providing the lower substructure (330), then fitting piles (346) into the site surface (600) and subsequently attaching said piles (346) to the lower substructure (330). The intermediate substructure (320) is then attached to the lower substructure (330) and the upper substructure (310) is finally attached to the intermediate substructure (320). It is preferred that said attachments, i.e. that of the intermediate substructure (320) to the lower substructure (330) and the upper substructure (310) to the intermediate substructure (320), are grouting attachments.

Although only a number of particular embodiments and examples of the present wind farm have been disclosed herein, it will be understood by those skilled in the art that other alternative embodiments and/or uses and obvious modifications and equivalents thereof are possible.

For example, the embodiment of present wind farm has been disclosed for offshore. In this particular application, one important varying feature is the sea depth. In this case, the sea depth has been defined herein as the distance from the sea level to the sea bed. For the purposes of the present wind farm, depth differences ΔH may range from about 20 to about 60 m. However, the present wind farm may be also of the onshore type, in which case, the important varying feature is the height. In onshore application, the height may be defined as the distance from the ground to the hub. Therefore, this disclosure covers all possible embodiments of the present wind farm and combinations thereof. Thus, the scope of the present disclosure should not be limited by particular embodiments, but should be determined only by a fair reading of the claims that follow.

Reference signs related to drawings and placed in parentheses in a claim, are solely for attempting to increase the intelligibility of the claim, and shall not be construed as limiting the scope of the claim.

## Claims

1. A wind farm (500) comprising at least two wind turbines (501, 502), each wind turbine (501, 502) including a foundation provided with a modular jacket (300'), the modular jacket (300') comprising a number of substructures (310, 320, 330) connectable to each other, wherein at least one substructure (310, 320, 330) in a wind turbine foundation is different in height (h) from at least one substructure (310, 320, 330) in another wind turbine foundation in order to adapt the different wind turbines (501, 502) of the wind farm (500) to a site (10) having differences in depth (ΔH) where the wind turbines (501, 502) of the wind farm (500) are installed.

2. A wind farm (500) as claimed in claim 1, wherein the modular jacket (300') comprises at least an upper substructure (310), an intermediate substructure (320), and a lower substructure (330), said substructures (310, 320, 330) being connectable to each other, and wherein at least the intermediate substructure (320) in one wind turbine foundation is different in height (h) from at least the intermediate substructure (320) in another wind turbine foundation in order to adapt the different wind turbines (501, 502) of the wind farm (500) to a site (10) having differences in depth (ΔH) where the wind turbines (501, 502) of the wind farm (500) are installed.

3. A wind farm (500) as claimed in claim 2, wherein the remainder substructures upper substructure (310) and lower substructure (330) in at least two different wind turbine foundations are at least similar in height (h) to each other.

4. A wind farm (500) as claimed in claim 2, wherein the lower substructure (330) comprises a foot unit (340) including a number of pins (345) that are adapted for receiving at least one portion of the length of corresponding piles (346) suitable to be inserted into a surface (600) of the site (10).

5. A wind farm (500) as claimed in claim 4, wherein a grouting chamber is defined between the pins (345) and the piles (346) for receiving grout in order to establish a grouted connection.

6. A wind farm (500) as claimed in any of the preceding claims, wherein the modular jacket (300') includes grouted connections for connecting the substructures (310, 320, 330) to each other.

7. A wind farm (500) as claimed in any of the preceding claims, wherein said at least one substructure (310, 320, 330) in a wind turbine foundation that is different in height (h) from at least one substructure (310, 320, 330) in another wind turbine foundation is such that different wind turbines (501, 502) in the wind farm (500) can be adapted to a site (10) where differences in depth (ΔH) range from about 20 to 60 m.

8. A wind farm (500) as claimed in any of the claims 2 to 7, wherein the upper substructure (310) of the modular jacket (300') has at least one inclined portion.

9. A wind farm (500) as claimed in any of the claims 2 to 8, wherein the intermediate substructure (320) of the modular jacket (300') is substantially vertical.

10. A wind farm (500) as claimed in any of the claims 2 to 9, wherein the lower substructure (330) of the modular jacket (300') has at least one inclined portion (335).

11. A method for installing a wind farm (500), the wind farm (500) comprising at least two wind turbines (501, 502) to be installed in a site surface (600), each of which including a foundation provided with a modular jacket (300') including at least an upper substructure (310), an intermediate substructure (320), and a lower substructure (330), at least the intermediate substructure (320) in one wind turbine foundation being different in height (h) from at least the intermediate substructure (320) in another wind turbine foundation in order to adapt the different wind turbines (501, 502) to a site (10) having differences in depth (ΔH) where the wind turbines (501, 502) are installed, the method comprising, for each wind turbine (501, 502):
- providing the lower substructure (330);
- fitting piles (346) into the site surface (600);
- attaching said piles (346) to the lower substructure (330);
- attaching the intermediate substructure (320) to the lower substructure (330); and
- attaching the upper substructure (310) to the intermediate substructure (320).

12. A method as claimed in claim 11, wherein at least one of the attachments of the intermediate substructure (320) to the lower substructure (330) and the upper substructure (310) to the intermediate substructure (320) is a grouting attachment.
